Europäisches Patentamt

European Patent Office

Office européen des brevets

(19)

(11) **EP 0 698 955 A1**

(12) **EUROPÄISCHE PATENTANMELDUNG**

(43) Veröffentlichungstag:
28.02.1996 Patentblatt 1996/09

(51) Int Cl.[6]: **H02H 7/085**, H02P 5/40,
B66B 13/14

(21) Anmeldenummer: 95890153.0

(22) Anmeldetag: 28.08.1995

(84) Benannte Vertragsstaaten:
BE CH DE DK ES FR GB GR IT LI LU NL SE

(30) Priorität: 26.08.1994 AT 1647/94

(71) Anmelder: WITRONIC ELEKTRONISCHE
GERÄTE GESELLSCHAFT M.B.H.
A-1220 Wien (AT)

(72) Erfinder: Vasile, Neic Aurel
A-3072 Kasten (AT)

(74) Vertreter: Collin, Hans, Dipl.-Ing. Dr. et al
Mariahilferstrasse 50
A-1070 Wien (AT)

(54) **Verfahren zur Verringerung der dynamischen Schliesskraft von motorbewegten Türen sowie Motorregelgerät zur Durchführung des Verfahrens**

(57)     Die Erfindung beschreibt ein Verfahren und ein Motorregelgerät zur Verringerung der dynamischen Schließkraft von motorkraftbewegten, insbesondere mit einem Drehstrommotor schlupffrei gekoppelten, Türen, insbesondere für Aufzüge. Das Verfahren ist im wesentlichen dadurch gekennzeichnet, daß der Arbeitspunkt des Motors auf der Drehmomentkennlinie bei Erreichen einer voreinstellbaren Türgeschwindigkeit durch die Regelung des Motorschlupfes in den Bereich des Motor-Kippmoments verschoben und solange beibehalten wird, als keine, eine einstellbare Grenze übersteigende, externe Kraft, z.B. manuelles Abbremsen, auf die Tür einwirkt. Dadurch wird beim versuchten manuellen Aufhalten der Türblätter deren Schließkraft kontinuierlich verringert, bis das Türblatt zum Stillstand kommt.

Fig. 1

## Beschreibung

Die Erfindung betrifft ein Verfahren und ein Motorregelgerät zur Verringerung der dynamischen Schließkraft von motorkraftbewegten, insbesondere mit einem Drehstrommotor schlupffrei gekoppelten, Türen, insbesondere für Aufzüge.

Vor allem im Aufzugsbau werden in großer Zahl motorkraftbewegte Türen eingesetzt. Sie dienen zum Abschluß der Fahrkorböffnungen und zum Abschluß des Schachtzuganges. Beim Schließen dieser Türen können jedoch Personen, welche sich im Bereich der bewegten Türblätter befinden, gefährdet werden. Verschiedenste Schutzeinrichtungen werden verwendet, um den Bereich der schließenden Türblätter abzusichern. Beispiele für solche Schutzeinrichtungen sind Lichtschranken, Ultraschallsensoren und mechanische Schlagleisten. Vorteilhaft wäre es jedoch, wenn zusätzlich zu diesen externen Schutzeinrichtungen auch das Türantriebssystem selbst so aufgebaut wäre, daß keine Gefahr vom bewegten Türblatt ausgeht. Dadurch könnte auch beim Ausfall türantriebssystemunabhängiger Schutzeinrichtungen ein gefährlicher Zustand verhindert werden.

In der Vergangenheit wurden bereits Türsysteme mit mechanischen Einrichtungen ausgestattet, welche eine Unterbrechung der Verbindung zwischen Motor und Türblatt bei Überschreiten einer bestimmten Hemmkraft, wie sie beim mechanischen Abbremsen des Türblattes entsteht, ermöglichten. Solche mechanische Einrichtungen sind jedoch nicht sehr empfindlich, können leicht verstellt werden und sind mechanisch aufwendig.

Wenn Türblätter mit Elektromotoren angetrieben werden sollen, muß die Leistung der Motoren so bemessen sein, daß die Türblätter kraftvoll beschleunigt und bewegt werden können. Gerade im Aufzugsbau bestimmen die Türöffnungszeiten und Türschließzeiten signifikant die Beförderungskapazität der Anlage. Immer schnellere, kraftvollere und dadurch auch gefährlichere Türbewegungen werden gefordert.

Die Erfindung beschreibt nun ein Verfahren, welches es erlaubt, einen Türantrieb mit einem geregelten Drehstromantrieb aufzubauen, welcher einerseits die Türblätter sehr kraftvoll bewegen kann, andererseits aber beim Schließen sehr empfindlich auf eine mechanische Abbremsung reagiert.

Drehstrommotoren haben wegen des systemimmanenten Schlupfes eine Nenndrehzahl, welche um ca. 5 % geringer ist als die Synchrondrehzahl des Motors. Mittels eines Motorreglers, welcher die Frequenz der dem Motor zugeführten Spannung stellen kann, ist es möglich, durch Änderung der Frequenz von Null bis zur Nennfrequenz des Motors, die Drehzahl des Motors und damit auch die Geschwindigkeit des Türblattes entsprechend einzustellen. Das Motordrehmoment bleibt dabei über den ganzen Bereich praktisch konstant.

Wenn nun beim Schließen der Türe versucht wird, die Bewegung des Türblattes manuell zu behindern, wird der Motor mit vollem Drehmoment versuchen, seine Nenndrehzahl entsprechend der eingestellten Frequenz beizubehalten, und wird dann bei beginnendem Verringern der Geschwindigkeit durch das Abbremsen noch sein Drehmoment entsprechend dem Verlauf der Drehmomentkennlinie bis zum ca. zweifachen Nenndrehmoment, dem sogenannten Kippmoment, verstärken.

Die Nenndrehzahl und die davon abgeleitete Betriebsdrehzahl genauso wie die theoretische Synchrondrehzahl sind von der Frequenz der dem Motor zugeführten Spannung abhängig. Die dem Motor zugeführte Spannung hat Frequenzwerte, welche entsprechend der gewünschten Türgeschwindigkeit zu bestimmten Punkten des Türweges je nach der benötigten Türblattgeschwindigkeit vom Motorregler ausgegeben werden. Das heißt, die Betriebsfrequenz des Motors und dadurch auch die Motordrehzahl ändert sich entsprechend dem Sollwertprofil der geforderten Türgeschwindigkeit.

Das erfindungsgemäße Verfahren ist nun dadurch gekennzeichnet, daß der Arbeitspunkt des Motors auf der Drehmomentkennlinie bei Erreichen einer voreinstellbaren Türgeschwindigkeit durch die Regelung des Motorschlupfes in den Bereich des Motor-Kippmoments verschoben und solange beibehalten wird, als keine, eine einstellbare Grenze übersteigende, externe Kraft, z.B. manuelles Abbremsen, auf die Tür einwirkt.

Dieser Bereich wurde deswegen gewählt, weil ab dem Kippmoment bei einer Verringerung der Drehzahl das Drehmoment geringer wird und dadurch beim manuellen Abbremsen des Motors bzw. des Türblattes das Drehmoment, entsprechend dem Verlauf der Drehmomentkennlinie, selbsttätig reduziert wird. Eine Person, welche manuell versucht, das Türblatt aufzuhalten, hat den Eindruck als ob das Türblatt kraftlos wäre, und je stärker die Bremsung erfolgt, umso stärker wird auch die Kraft der Türbewegung reduziert. Vor allem, wenn beispielsweise Personen von einem Türblatt eingeklemmt würden, wobei zwangsläufig eine abrupte Abbremsung des Türblattes erfolgt, wird auch das Drehmoment sehr rasch reduziert, wodurch Verletzungen möglichst hintangehalten werden können.

Zweckmäßig wird zur Regelung des Motorschlupfes die dem Motor zugeführte Spannung unter Konstanthaltung ihrer Frequenz verändert.

Damit der Bereich des Kippmoments auf der Drehmomentkennlinie beim unbeeinflußten Schließen nicht verlassen wird, ist vorgesehen, daß, insbesondere geringe, Abweichungen des Arbeitspunktes des Motors vom Kippmoment unter Einhaltung einer einstellbaren Totzeit ausgeregelt werden.

Für innerhalb der Totzeit auftretende Kräfte, die eine vorgegebene Grenze übersteigen, wie sie beispielsweise beim manuellen Abbremsen der Tür auftreten, unterbleibt die Ausregelung, indem bei Erkennen solcher Kräfte die dem Motor zugeführte Spannung und Frequenz konstant gehalten wird. Die Bereiche, ab wann eine Ausregelung unterbleibt und die Totzeit sind einstellbar, weil türsystemabhängig.

Anstatt auf die Tür einwirkende externe Kräfte direkt zu messen, kann auch eine Messung der Differenz zwischen der voreingestellten Betriebsdrehzahl und der tatsächlichen Motordrehzahl erfolgen. Die Betriebsdrehzahl kann mit Hilfe eines analogen oder digitalen Drehzahl-Istwertgebers in einem analogen oder digitalen Regelkreis im Motorregler bestimmt werden.

Eine Variante der Erfindung ist dadurch gekennzeichnet, daß bei Überschreiten einer einstellbaren Drehzahldifferenz zwischen der voreingestellten Betriebsdrehzahl und der tatsächlichen Motordrehzahl ein Meldesignal abgegeben wird. Durch dieses Meldesignal kann z.B. eine Umkehr der Türbewegungsrichtung oder eine Notbremsung veranlaßt werden.

Eine Ausgestaltung der Erfindung ist dadurch gekennzeichnet, daß der Arbeitspunkt auf der Drehmomentkennlinie eines mit dem Türblatt schlupffrei gekoppelten Drehstrommotors mittels eines Motorregelgeräts und eines damit und schlupffrei mit dem Motor verbundenen Drehzahlsensors durch Regelung der dem Motor zugeführten Spannung bei Konstanthaltung der Frequenz unter Vergrößerung des Motorschlupfes so verschoben wird, daß die Motordrehzahl bei gewöhnlichen Betriebsverhältnissen im Bereich des Motorkippmoments bleibt.

Weiters ist es zweckmäßig, daß die Drehzahl des mit dem Türblatt mechanisch schlupffrei gekoppelten Drehstrommotors bei manuellem Abbremsen des Türblattes und durch die dadurch folgende Vergrößerung des Motorschlupfes verringert wird, indem der Motor bei unveränderter Motorspannung und Frequenz entsprechend seiner Drehmomentkennlinie kontinuierlich zu Bereichen geringerer Drehmoments bewegt wird.

Eine weitere Variante des erfindungsgemäßen Verfahrens ist dadurch gekennzeichnet, daß im Motorregelgerät die tatsächliche Motordrehzahl mit der eingestellten Betriebsdrehzahl verglichen wird und daß beim Überschreiten einer bestimmten einstellbaren Drehzahldifferenz ein Relais angesteuert wird, dessen Stellung über Klemmen abfragbar ist.

Die Erfindung umfaßt auch ein spezielles Motorregelgerät. Dieses Gerät ist dadurch gekennzeichnet, daß die Ausgangsspannung und -frequenz zur Ansteuerung eines Türmotors getrennt veränderbar sind. Dadurch wird es möglich, den Schlupf eines Drehstrommotors zu verändern.

Es kann auch ein Eingang für ein Signal von einem Motordrehzahl-Istwertgeber, insbesondere Tachometer, vorgesehen sein. Das zugeführte Signal kann analog oder digital sein, ebenso wie auch die Regelelektronik im Motorregelgerät analog oder digital ausgeführt sein kann.

Zweckmäßig ist weiters ein Relais zur Ansteuerung bei Überschreiten einer vorgegebenen Differenz zwischen eingestellter Betriebsdrehzahl und tatsächlicher Motordrehzahl vorgesehen, das bei einer starken Abbremsung der Türblätter angesteuert wird und dann eine Umkehr der Türbewegung oder eine Notbremsung veranlaßt.

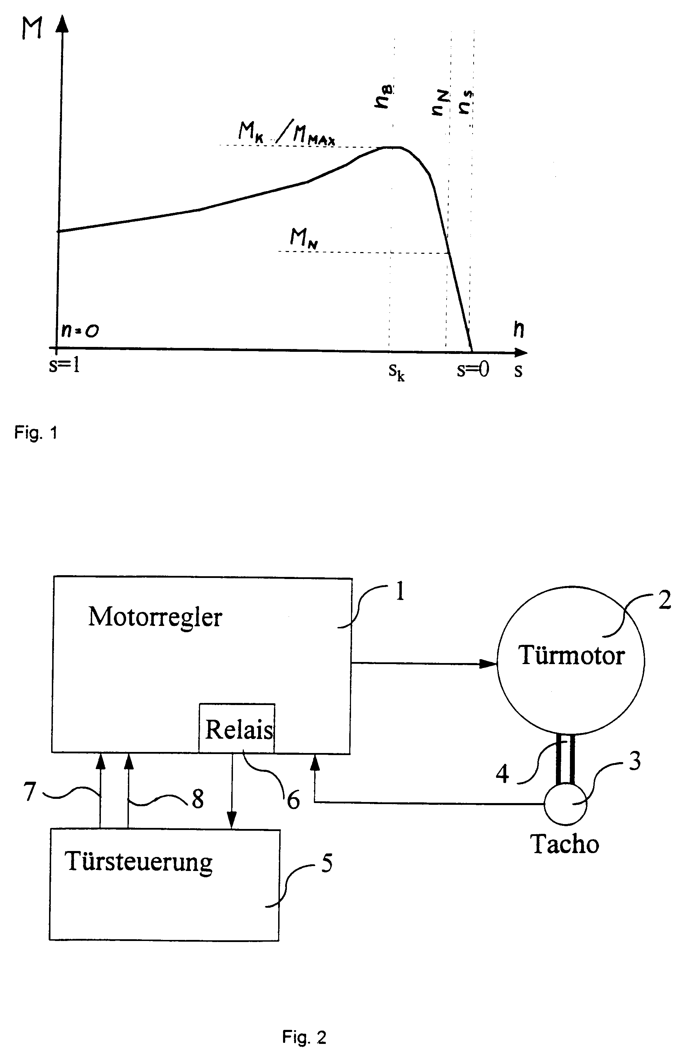

Die Erfindung wird nun anhand der Zeichnung beispielhaft näher erläutert. Dabei zeigt Fig. 1 eine typische Drehmomentkennlinie für das Drehmoment M in Abhängigkeit vom Schlupf S bzw. der Drehzahl n. In Fig. 2 ist der prinzipielle Aufbau eines motorbetriebenen Türschließsystems gemäß der Erfindung dargestellt.

Bezug nehmend auf Fig. 1 erkennt man aus dem Drehmomentverlauf und der folgenden Formel für das Drehmoment M:

$$M = \frac{1}{2\pi} \frac{m}{n_{sy}} \frac{U_a^2 \frac{X_h}{X_h + X_{\sigma a}}}{\left(R_a + \frac{R_a}{S}\right)^2 + (X_{\sigma a} + X_{\sigma A})^2} \frac{R_a}{S};$$

Formel 1;
Bezeichnungen:

| | |
|---|---|
| m | Anzahl der Phasen und Stränge im Ständer |
| $U_a$ | Ständerstrangspannung |
| $R_a$ | Ständerstrangwiderstand |
| $n_{sy}$ | Synchrondrehzahl |
| $X_{\sigma a}$ | Ständerstrangstreureaktanz |
| $X_{\sigma A}$ | Läuferstrangstreureaktanz |
| $X_h$ | Hauptfeldreaktanz |
| S | Schlupf |
| M | Drehmoment |

daß bei vorgegebener Anzahl der Phasen und Stränge im Ständer und bei konstanter Ständerstrangspannung und Synchrondrehzahl unter idealisierter Annahme, daß sich der Ständerstrangwiderstand, die Ständerstrangstreu reaktanz, die Läuferstrangstreureaktanz und die Hauptfeldreaktanz nicht ändern, das Motordrehmoment M direkt vom Schlupf S abhängt und vom Punkt s=0, bei welchem auch das Drehmoment gleich Null ist, stark ansteigt bis zum maximalen Drehmoment $M_{MAX}$ am Punkt $S_k$. Das maximale Drehmoment $M_{MAX}$ wird auch als Kippmoment $M_K$ bezeichnet. Nimmt der Schlupf S weiter zu und damit die Betriebsdrehzahl $n_B$ ab, so fällt das Drehmoment bis zum maximalen Schlupf S = 1 vom Kippmoment $M_K$ kontinuierlich ab. Herkömmlicherweise werden Drehstrommotoren bei Nenndrehzahl $n_N$ betrieben, wobei der Motor das Nenndrehmoment $M_N$ ausübt. Vergrößert sich der Schlupf, beispielsweise durch Abbremsen des Motors, so steigt das Motordrehmoment M bis zum maximalen Drehmoment $M_{MAX}$ rapid an, um erst bei Erreichen dieses Maximums kontinuierlich abzufallen. Demgegenüber liegt beim erfindungsgemäßen Betrieb des Türantriebsmotors während des Schließvorgangs die Betriebsdrehzahl $n_B$ im Bereich des Kippmoments $M_K$ bzw. des Schlupfes $S_k$.

Bei einer manuellen Abbremsung der Tür und damit des Motors verschiebt sich die Drehzahl des Motors zu Bereichen kleinerer Drehzahl. Dadurch wird, wie in der Fig. 1 bildlich und formelmäßig dargestellt, das Drehmoment verringert.

Aus systemimmanenten Gründen wird bei einem Drehstrommotor der Schlupf S nie 0 und damit wird auch die Synchrondrehzahl $n_S$ nie erreicht.

Unter Bezugnahme auf Fig. 2 wird nun ein Türschließsystem gemäß der Erfindung erläutert: Der Motorregler 1 ist speziell für den Einsatz als Türmotorregler konstruiert und kann unabhängig voneinander die Motorspannung und die Motorfrequenz stellen bzw. regeln. Dies ist notwendig, damit bei einer der gewünschten Türschließgeschwindigkeit entsprechenden Motordrehzahl mittels einer Regelung der Motorspannung bei konstanter Frequenz der Motorschlupf so eingestellt werden kann, daß durch Vergrößerung des Motorschlupfes die Motordrehzahl im Bereich des Kippmomentes liegt. Die Motorspannung mit der entsprechenden Frequenz wird dann dem Türmotor 2 zugeführt. Über einen Istwertgeber 3, einem sogenannten Tacho, welcher mittels einer mechanischen Kupplung 4 mit dem Motor verbunden ist, kann der Istwert der Motordrehzahl zum Motorregler 1 rückgekoppelt werden. Die Versorgungsspannung wird über eine mehrpolige Zuleitung 7, und die Steuersignale über eine mehrpolige Leitung 8 vom Türsteuergerät 5 zum Türregler verbunden. Das Relais 6 wird vom Regelgerät beim Überschreiten einer einstellbaren Drehzahldifferenz zwischen der eingestellten Betriebsdrehzahl und der realisierten Istdrehzahl angesteuert und gibt die Information mittels einer mehrpoligen Leitung 6 an die Türsteuerung 5 weiter.

**Patentansprüche**

1.  Verfahren zur Verringerung der dynamischen Schließkraft von motorkraftbewegten, insbesondere mit einem Drehstrommotor schlupffrei gekoppelten, Türen, insbesondere für Aufzüge, dadurch gekennzeichnet, daß der Arbeitspunkt des Motors auf der Drehmomentkennlinie bei Erreichen einer voreinstellbaren Türgeschwindigkeit durch die Regelung des Motorschlupfes in den Bereich des Motor-Kippmoments verschoben und solange beibehalten wird, als keine, eine einstellbare Grenze übersteigende, externe Kraft, z.B. manuelles Abbremsen, auf die Tür einwirkt.

2.  Verfahren nach Anspruch 1, dadurch gekennzeichnet, daß zur Regelung des Motorschlupfes die dem Motor zugeführte Spannung unter Konstanthaltung ihrer Frequenz verändert wird.

3.  Verfahren nach Anspruch 1 oder 2, dadurch gekennzeichnet, daß, insbesondere geringe, Abweichungen des Arbeitspunktes des Motors vom Kippmoment auf der Drehmomentkennlinie, die nicht durch die externe Kraft verursacht werden, unter Einhaltung einer einstellbaren Totzeit, ausgeregelt werden.

4.  Verfahren nach einem der Ansprüche 1 bis 3, dadurch gekennzeichnet, daß bei Erkennen einer auf die Tür einwirkenden, die einstellbare Grenze übersteigenden externen Kraft die dem Motor zugeführte Spannung und Frequenz konstant gehalten wird.

5.  Verfahren nach einem der Ansprüche 1 bis 4, dadurch gekennzeichnet, daß externe, auf die Tür einwirkende Kräfte durch eine Messung der Differenz zwischen der voreingestellten Betriebsdrehzahl und der tatsächlichen Motordrehzahl ermittelt werden.

6.  Verfahren nach einem der Ansprüche 1 bis 5, dadurch gekennzeichnet, daß bei Überschreiten einer einstellbaren Drehzahldifferenz zwischen der voreingestellten Betriebsdrehzahl und der tatsächlichen Motordrehzahl ein Meldesignal abgegeben wird.

7.  Verfahren nach einem der Ansprüche 1 bis 6, dadurch gekennzeichnet, daß der Arbeitspunkt auf der Drehmomentkennlinie eines mit dem Türblatt gekoppelten Drehstrommotors mittels eines Motorregelgeräts und eines damit und mit dem Motor verbundenen Drehzahlsensors durch Regelung der dem Motor zugeführten Spannung bei Konstanthaltung der Frequenz unter Vergrößerung des Motorschlupfs so verschoben wird, daß die Motordrehzahl bei gewöhnlichen Betriebsverhältnissen im Bereich des Motorkippmoments bleibt.

8.  Verfahren nach Anspruch 7, dadurch gekennzeichnet, daß die Drehzahl des mit dem Türblatt mechanisch schlupffrei gekoppelten Drehstrommotors bei manuellem Abbremsen des Türblattes und durch die dadurch folgende Vergrößerung des Motorschlupfs verringert wird, indem der Motor bei unveränderter Motorspannung und Frequenz entsprechend seiner Drehmomentkennlinie kontinuierlich zu Bereichen geringeren Drehmoments bewegt wird.

9.  Verfahren nach Anspruch 7 oder 8, dadurch gekennzeichnet, daß im Motorregelgerät die tatsächliche Motordrehzahl mit der eingestellten Betriebsdrehzahl verglichen wird und daß beim Überschreiten einer bestimmten einstellbaren Drehzahldifferenz ein Relais angesteuert wird, dessen Stellung über Klemmen abfragbar ist.

10. Motorregelgerät, insbesondere zur Durchführung des Verfahrens nach einem der Ansprüche 1 bis 9, dadurch gekennzeichnet, daß die Ausgangsspannung und -frequenz zur Ansteuerung eines Türmotors (2) getrennt veränderbar sind.

11. Motorregelgerät nach Anspruch 10, dadurch gekennzeichnet, daß ein Eingang für ein Signal von einem Motordrehzahl-Istwertgeber (3), insbesondere digitalen Tachometer (3), vorgesehen ist.

12. Motorregelgerät nach Anspruch 10 oder 11, dadurch gekennzeichnet, daß ein Relais (6) zur Ansteuerung bei Überschreiten einer vorgegebenen Differenz zwischen eingestellter Betriebsdrehzahl und tatsächlicher Motordrehzahl vorgesehen ist.

Fig. 1

Fig. 2

**Europäisches Patentamt**

# EUROPÄISCHER RECHERCHENBERICHT

Nummer der Anmeldung

EP 95 89 0153

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | PATENT ABSTRACTS OF JAPAN vol. 016 no. 132 (M-1229) ,3.April 1992 & JP-A-03 293284 (MITSUBISHI ELECTRIC CORP) 24.Dezember 1991, * Zusammenfassung * --- | 1 | H02H7/085 H02P5/40 B66B13/14 |
| A | PATENT ABSTRACTS OF JAPAN vol. 017 no. 660 (M-1522) ,7.Dezember 1993 & JP-A-05 219602 (TOYOTA AUTOM LOOM WORKS LTD) 27.August 1993, * Zusammenfassung * ----- | 1 | |
| | | | **RECHERCHIERTE SACHGEBIETE (Int.Cl.6)** |
| | | | H02H H02P B66B |

Der vorliegende Recherchenbericht wurde für alle Patentansprüche erstellt

| Recherchenort | Abschlußdatum der Recherche | Prüfer |
|---|---|---|
| DEN HAAG | 30.November 1995 | Salm, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

................................................................

& : Mitglied der gleichen Patentfamilie, übereinstimmendes Dokument

EPO FORM 1503 03.82 (P04C03)